# FASCICULE DE BREVET EUROPEEN

(11) **EP 4 560 253 B1**
(45) Date de publication et mention de la délivrance du brevet: **21.01.2026**
(21) Numéro de dépôt: 24213564.8
(22) Date de dépôt: 18.11.2024
(51) Int. Cl.: F41F 3/065, B64D 1/06, F42B 15/36

(54) **SYSTÈME ET PROCÉDÉ D'ACCROCHAGE ET D'ÉJECTION D'UN ÉQUIPEMENT ÉJECTABLE**
SYSTEM UND VERFAHREN ZUM EIN- UND AUSWERFEN EINER SCHLEUDERVORRICHTUNG
SYSTEM AND METHOD FOR HANGING AND EJECTING EJECTABLE EQUIPMENT

(30) Priorité: 23.11.2023 FR 2312696
(43) Date de publication de la demande: 28.05.2025
(73) Titulaire: MBDA France, 92350 Le Plessis-Robinson (FR)
(72) Inventeur: MADOULET, Florian, 92350 Le Plessis-Robinson (FR); BOULANGER, Sébastien, 92350 Le Plessis-Robinson (FR)
(74) Mandataire: Gevers & Orès

(56) Documents cités:
- EP-B1- 0 070 275
- FR-A- 1 267 296
- FR-A1- 2 408 521
- US-A- 2 888 294
- US-A- 3 181 908

## Description

### Domaine technique

La présente invention concerne un système et un procédé d'accrochage et d'éjection d'un équipement éjectable par rapport à une structure de support, par exemple un missile destiné à être accroché de façon éjectable à une installation de tir d'un aéronef.

### Etat de la technique

Dans des domaines variés comme les domaines de l'aéronautique, de l'aérospatial ou de la défense, il est particulièrement intéressant de pouvoir accrocher et verrouiller un équipement ou un sous-ensemble à une structure de support et de pouvoir les déverrouiller et les séparer (à savoir éjecter l'équipement) à un moment souhaité. C'est, par exemple, le cas de boosters équipant des engins volants tels que des fusées ou le cas de systèmes d'armes (missiles, bombe, ...) équipant des aéronefs.

On connaît des dispositifs usuels permettant de réaliser une liaison séparable entre deux pièces comme des broches, des écrous séparables ou explosifs, des vérins ou encore des rétracteurs. Toutefois, dans certains cas, comme celui d'un missile aéroporté, il est nécessaire de recourir à une conception particulière permettant de garantir un séquencement adapté des phases de déverrouillage et d'éjection de l'équipement par rapport à la structure de support. En effet, pour des raisons de sécurité, il peut être impératif que le déverrouillage et l'éjection de l'équipement se déroulent de manière séquencée et fiable (à savoir non simultanément et dans le bon ordre). Un déverrouillage sans éjection peut entraîner un risque de collision entre l'équipement et la structure de support. De même, une éjection sans déverrouillage peut entraîner des dommages irréversibles à l'équipement et/ou à la structure de support, voire un évènement catastrophique (comme l'activation d'un missile non éjecté).

On connaît des systèmes comportant plusieurs mécanismes permettant de réaliser un tel séquencement. Ces systèmes comportent généralement un mécanisme dédié au déverrouillage, un mécanisme dédié au séquencement et un mécanisme dédié à l'éjection. Par conséquent, ils présentent une conception et une cinématique complexes et nécessitent parfois plusieurs sources d'énergie. Ces systèmes sont donc peu optimaux en termes de complexité, de masse, de fiabilité et d'encombrement.

On connaît, notamment par les documents EP 0 070 275 B1, et FR 2 408 521 A1, des dispositifs de support et d'éjection d'une charge largable telle qu'un réservoir ou un missile. Toutefois, ces dispositifs ne sont pas complètement satisfaisant,, en particulier en ce qui concerne la fiabilité de l'éjection.

Ainsi, il existe un besoin de trouver des solutions plus satisfaisantes.

### Exposé de l'invention

La présente invention a pour objet de remédier aux inconvénients précités. Elle concerne un système d'accrochage et d'éjection pour un équipement tel qu'un missile, destiné à être accroché de façon éjectable à une structure de support, en particulier une installation de tir d'un aéronef.

Selon l'invention, ledit système comportant au moins :
- un corps accrocheur destiné à être agencé au moins en partie entre l'équipement et la structure de support pour réaliser l'accrochage ;
- un plongeur agencé dans le corps accrocheur de façon mobile ;
- un dispositif de déplacement configuré pour déplacer le plongeur par rapport au corps accrocheur ; et
- une pluralité d'éléments de verrouillage sur lesquels le plongeur est configuré pour agir en étant déplacé par le dispositif de déplacement,
est configuré pour prendre, successivement, au moins les configurations suivantes :
- une configuration verrouillée dans laquelle le plongeur agit sur les éléments de verrouillage pour les verrouiller de manière à lier solidairement l'équipement à la structure de support ;
- une configuration déverrouillée dans laquelle le plongeur, en étant déplacé par le dispositif de déplacement, déverrouille les éléments de verrouillage de manière à libérer l'équipement par rapport à la structure de support ; et
- une configuration d'éjection dans laquelle le plongeur, en continuant d'être déplacé par le dispositif de déplacement, vient en contact avec l'équipement et exerce un effort sur ledit équipement de manière à réaliser une éjection dudit équipement par rapport à la structure de support.

Ainsi, grâce à l'invention, on dispose d'une solution simple, légère, fiable et peu encombrante permettant de réaliser de manière séquencée et sécurisée le déverrouillage et l'éjection d'un équipement par rapport à une structure de support. En effet, le système utilise un seul mécanisme (impliquant un seul mouvement) et une seule source d'énergie pour réaliser à la fois le déverrouillage et l'éjection de l'équipement, ce qui rend ledit système particulièrement fiable et permet d'éviter tout évènement indésirable (voire catastrophique) qui pourrait résulter d'un déverrouillage de l'équipement sans éjection ou inversement.

Avantageusement, le plongeur comprend une extrémité pourvue d'une tête configurée pour pouvoir agir sur les éléments de verrouillage lorsque le plongeur est déplacé.

Dans un mode de réalisation particulier, le plongeur correspond à un piston agencé de façon coulissante dans un espace interne du corps accrocheur de manière à former un vérin.

Avantageusement, le vérin formé par le plongeur et le corps accrocheur correspond à l'un des vérins suivants : un vérin simple effet, un vérin double effet.

De plus, avantageusement, le piston formé par le plongeur correspond à un piston télescopique comprenant au moins un étage intermédiaire creux agencé de façon coulissante dans l'espace interne du corps accrocheur et un étage inférieur agencé de façon coulissante dans l'étage intermédiaire, l'une des extrémités de l'étage inférieur étant configurée pour pouvoir agir sur les éléments de verrouillage.

Ainsi, on est en mesure d'obtenir une course du plongeur plus importante tout en restant compact.

Dans un mode de réalisation préféré, le dispositif de déplacement correspond à un générateur de pression relié à l'espace interne du corps accrocheur par un orifice et configuré pour pouvoir générer une pression sur le plongeur de manière à déplacer ledit plongeur.

De façon avantageuse, le dispositif de déplacement correspond à l'un des générateurs de pression suivants : une cartouche pyrotechnique génératrice de gaz, une cartouche génératrice de fluide, un dispositif pneumatique, un dispositif hydraulique.

En outre, avantageusement, le système comporte un limiteur d'effort agencé sur le plongeur et présentant une section réduite par rapport à celle dudit plongeur, le limiteur d'effort étant configuré pour fermer l'orifice reliant le dispositif de déplacement à l'espace interne du corps accrocheur en étant logé dans ledit orifice au moins lorsque le système est dans la configuration verrouillée.

Ainsi, le limiteur d'effort permet de limiter la surface sur laquelle le dispositif de déplacement (générateur de pression) génère une pression, au moins lors du passage de la configuration verrouillée à la configuration déverrouillée. Cela permet de contrôler la vitesse du plongeur et d'éviter un choc trop important du plongeur contre l'équipement.

Dans un mode de réalisation particulier, en variante du mode de réalisation préféré, le dispositif de déplacement correspond à l'un des dispositifs suivants : un dispositif électrique, un dispositif électromagnétique.

De plus, avantageusement, les éléments de verrouillage correspondent à l'un des éléments suivants : des tonneaux, des billes, des rouleaux, des coins, des clavettes.

Avantageusement, dans la configuration déverrouillée, il existe un jeu entre la partie du plongeur destinée à venir en contact avec l'équipement dans la configuration d'éjection et ledit équipement. Ce jeu permet d'assurer un délai lors du séquencement entre le déverrouillage et l'éjection de l'équipement.

La présente invention concerne également une structure de support, en particulier une installation de tir d'un aéronef, sur laquelle un équipement, en particulier un missile, est destiné à être accroché de façon éjectable.

Selon l'invention, la structure de support comporte au moins un système d'accrochage et d'éjection tel que décrit ci-dessus.

Avantageusement, la structure de support comporte au moins deux systèmes d'accrochage et d'éjection agencés de part et d'autre du centre de gravité de l'équipement.

Une telle structure de support munie de plusieurs systèmes d'accrochage et d'éjection permet d'obtenir une meilleure maîtrise de l'éjection de l'équipement.

La présente invention concerne, en outre, un procédé pour éjecter un équipement accroché de façon éjectable à une structure de support à l'aide d'au moins un système tel que décrit ci-dessus.

Selon l'invention, à partir d'une configuration verrouillée dans laquelle l'équipement est accroché et verrouillé à la structure de support, ledit procédé comporte au moins la suite d'étapes successives suivante :
- une étape de déverrouillage pour commander le dispositif de déplacement de manière à déplacer le plongeur de sorte qu'il libère les éléments de verrouillage et déverrouille l'équipement par rapport à la structure de support ; et
- une étape d'éjection pour continuer de déplacer le plongeur à l'aide du dispositif de déplacement de sorte que ledit plongeur vienne en contact avec l'équipement et exerce un effort sur ledit équipement pour réaliser l'éjection dudit équipement par rapport à la structure de support.

De façon avantageuse, le procédé comprend une étape d'accrochage, mise en œuvre préalablement à l'étape de déverrouillage, pour positionner l'équipement sur la structure de support de sorte que le système soit agencé, au moins en partie, entre ledit équipement et ladite structure de support, et pour déplacer le plongeur de sorte qu'il agisse sur les éléments de verrouillage pour les verrouiller de manière à lier solidairement l'équipement à la structure de support.

### Brève description des figures

Les figures annexées feront bien comprendre comment l'invention peut être réalisée. Sur ces figures, des références identiques désignent des éléments semblables.
La figure 1 est une vue de face d'une structure de support sur laquelle un équipement est accroché à l'aide d'un système d'accrochage et d'éjection selon un mode de réalisation particulier.
La figure 2 est une vue latérale, en coupe, du système de la figure 1 dans une configuration verrouillée.
La figure 3 est une vue latérale, en coupe, du système de la figure 1 dans une configuration déverrouillée.
La figure 4 est une vue latérale, en coupe, du système de la figure 1 dans une configuration d'éjection.
La figure 5 est une vue latérale, en coupe, du système de la figure 1 dans une configuration d'éjection dans laquelle l'équipement est écarté de la structure de support.
La figure 6 est une vue latérale, en coupe, du système de la figure 1 dans une configuration d'éjection et dans un mode de réalisation dans lequel ledit système comporte un plongeur télescopique.

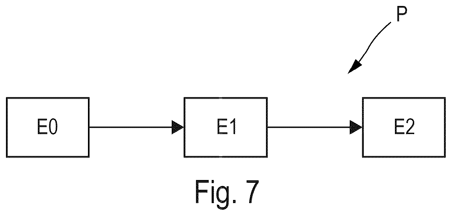

La figure 7 est un schéma synoptique d'un procédé d'accrochage et d'éjection d'un équipement éjectable selon un mode de réalisation particulier.

### Description détaillée

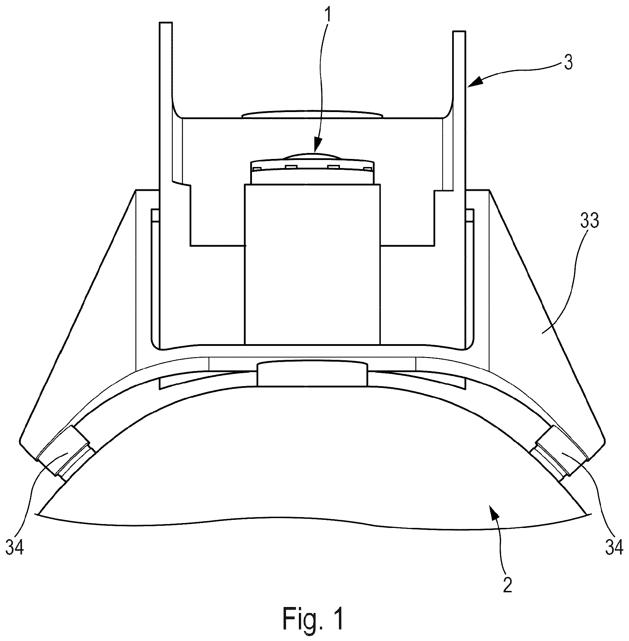

Un système d'accrochage et d'éjection 1 (ci-après système 1) permettant d'illustrer l'invention est représenté dans un mode de réalisation particulier de la figure 1 à la figure 5. Ce système 1 permet d'accrocher deux éléments entre eux de manière éjectable. Dans le mode de réalisation particulier considéré, le système 1 permet d'accrocher un équipement 2 sur une structure de support 3 et, lorsqu'on le souhaite, il permet de d'éjecter ledit équipement 2.

Dans le cadre de la présente invention, le verbe « accrocher » désigne l'action de lier solidairement des éléments (comme des pièces ou des sousensembles) les uns aux autres. A l'inverse, le verbe « éjecter » désigne l'action de séparer des éléments qui étaient, auparavant, liés ensemble, en les écartant les uns des autres. Ainsi, par l'expression « accroché de façon éjectable », on entend que le système 1 est configuré pour pouvoir fixer solidairement l'équipement 2 sur la structure de support 3 et pour pouvoir être commandé de manière à éjecter (ou séparer) l'équipement 2 de la structure de support 3 à un moment souhaité.

De manière non limitative, le système 1 est particulièrement adapté pour des applications aéroportées. Par exemple, comme représenté sur la figure 1, l'équipement 2 peut correspondre à un engin éjectable (ou largable) tel qu'un missile et la structure de support 3 peut correspondre à une installation de tir d'un aéronef. Un exemple d'une telle application sera détaillé ci-après.

Pour réaliser l'accrochage et l'éjection de l'équipement 2, le système 1 est agencé sur la structure de support 3 de manière à pouvoir être positionné en partie entre l'équipement 2 et ladite structure de support 3. Le système 1 ainsi agencé est configuré pour pouvoir prendre, successivement, au moins les configurations suivantes : une configuration verrouillée, une configuration déverrouillée et une configuration d'éjection.

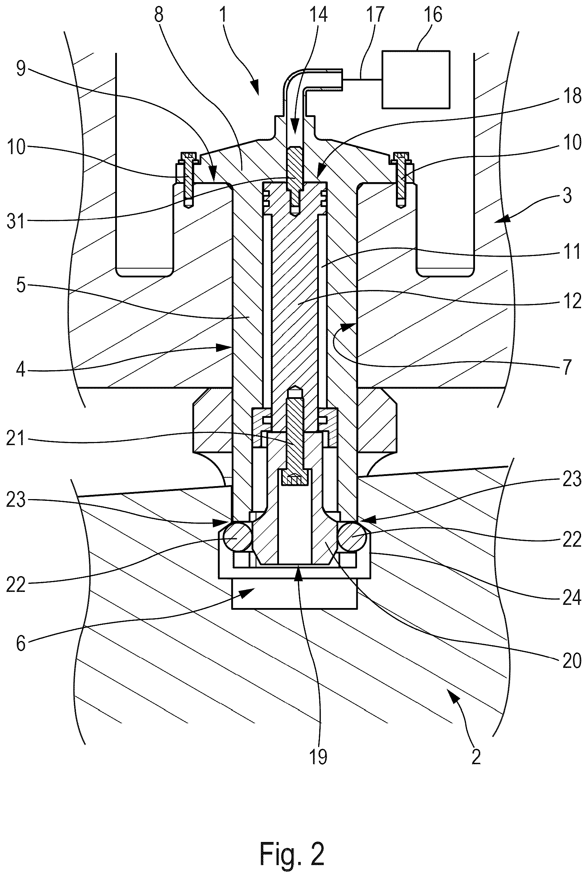

Dans la configuration verrouillée, représentée sur la figure 2, l'équipement 2 est positionné sur la structure de support 3 et le système 1 réalise une liaison qui verrouille solidairement ledit équipement 2 à ladite structure de support 3.

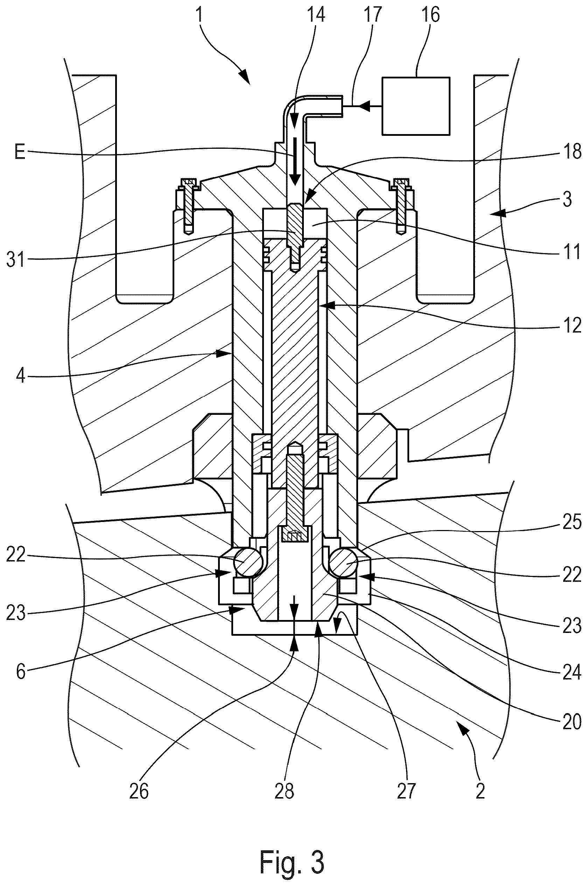

Dans la configuration déverrouillée, représentée sur la figure 3, le système 1 déverrouille la liaison entre l'équipement 2 et la structure de support 3 de sorte que ledit équipement 2 n'est plus lié solidairement à ladite structure de support 3.

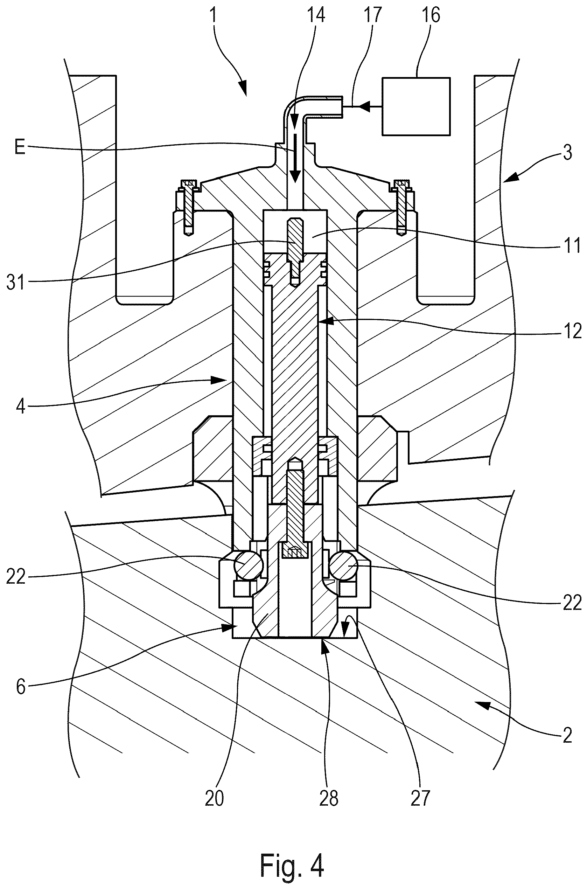

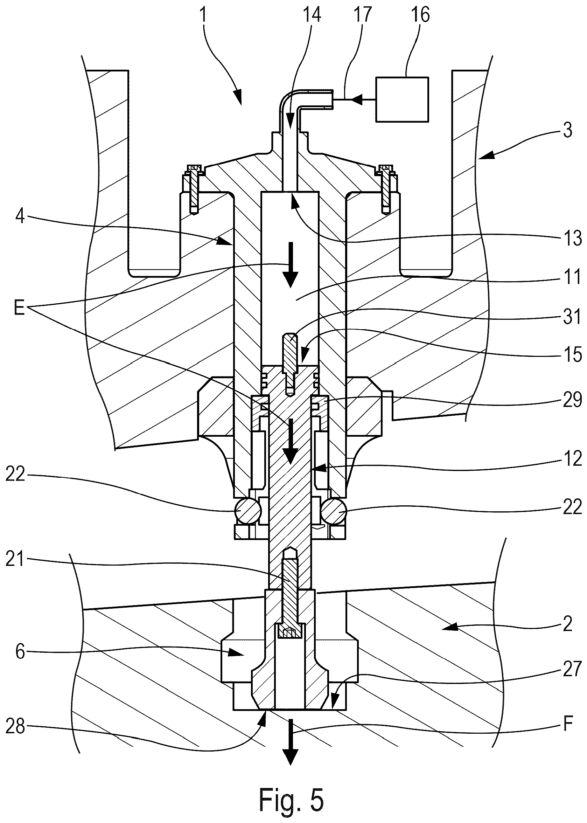

En outre, dans la configuration d'éjection, représentée sur la figure 4 et la figure 5, le système 1 sépare l'équipement 2 de la structure de support 3 en exerçant un effort sur ledit équipement 2 de manière à l'écarter de la structure de support 3.

Il convient de noter la différence entre les fonctions de déverrouillage et d'éjection. En effet, dans la configuration déverrouillée, l'équipement 2 n'est plus lié solidairement à la structure de support 3 mais il n'est pas nécessairement séparé de cette dernière. Comme expliqué ci-après, la distinction entre le déverrouillage et l'éjection permet, notamment, au système 1 de séquencer ces deux actions d'une façon particulièrement fiable.

Dans le mode de réalisation particulier représenté de la figure 2 à la figure 5, le système 1 comporte un corps accrocheur 4 agencé sur la structure de support 3. Plus précisément, le corps accrocheur 4 comprend un tronçon cylindrique 5 de forme allongée qui est agencé dans un alésage 7 de la structure de support 3. L'alésage 7 correspond à un trou traversant débouchant vers une partie interne de la structure de support 3 d'un côté et vers une partie destinée à recevoir l'équipement 2 de l'autre côté. Le tronçon cylindrique 5 présente un diamètre adapté de manière à pouvoir être inséré de manière ajustée dans l'alésage 7.

Dans d'autres modes de réalisation, le corps accrocheur 4 peut présenter des formes prismatiques variées adaptées selon l'application considérée et prévues pour être insérées dans un alésage 7 de forme correspondante. Par exemple, le corps accrocheur 4 peut comprendre un tronçon de section carrée, triangulaire ou hexagonale.

En outre, le corps accrocheur 4 comprend un épaulement 8 en forme de chapeau situé à l'une de ses extrémités. L'épaulement 8 est configuré pour venir en appui contre une surface d'appui 9 de l'alésage 7, agencée à l'extrémité dudit alésage 7 qui est orientée vers la partie interne de la structure de support 3. Le système 1 comporte une pluralité de vis 10 pour fixer le corps accrocheur 4 sur la structure de support 3. Les vis 10 sont agencées de manière traversante dans l'épaulement 8 et vissées dans la structure de support 3 au niveau de la surface d'appui 9. Les vis 10 ainsi agencées permettent d'assurer un arrêt en translation du corps accrocheur 4 lors de l'éjection de l'équipement 2. Dans d'autres modes de réalisation, d'autres moyens usuels d'arrêt en translation peuvent être envisagés en variante des vis 10.

De plus, le tronçon cylindrique 5 présente une longueur adaptée de sorte que, lorsque le corps accrocheur 4 est fixé sur la structure support 3, une extrémité du tronçon cylindrique 5 dépasse vers la partie destinée à recevoir l'équipement 2

Dans la configuration verrouillée (figure 2), l'équipement 2 est positionné et maintenu en place sur la structure de support 3 par le système 1. Pour ce faire, l'équipement 2 comporte une cavité 6 correspondant à un trou borgne débouchant vers l'extérieur dudit équipement 2. L'équipement 2 est positionné de sorte que la cavité 6 soit en regard de l'alésage 7. L'extrémité du tronçon cylindrique 5 du corps accrocheur 4 débouchant vers l'extérieur de la structure de support 3 est configurée pour être insérée de manière ajustée dans la cavité 6.

En outre, le corps accrocheur 4 comporte un espace interne 11 dans lequel un plongeur 12 est agencé de manière coulissante. Le plongeur 12 correspond à un piston pouvant être rétracté et déployé par rapport notamment à l'espace interne 11, de manière à former un vérin. Le plongeur 12 est notamment configuré pour pouvoir être déplacé de manière à agir sur des éléments qui viennent se bloquer dans la cavité 6, verrouillant ainsi l'équipement 2, comme détaillé ci-après.

Dans le mode de réalisation particulier représenté de la figure 2 à la figure 5, le plongeur 12 et le corps accrocheur 4 forment un vérin simple effet. Dans d'autres modes de réalisation, il est possible d'envisager que le plongeur 12 et le corps accrocheur 4 forment un vérin double effet.

Dans un mode de réalisation préféré, représenté de la figure 2 à la figure 5, le plongeur 12 correspond à un piston simple. Toutefois, dans d'autres modes de réalisation, le plongeur 12 peut correspondre à un piston télescopique comportant plusieurs étages.

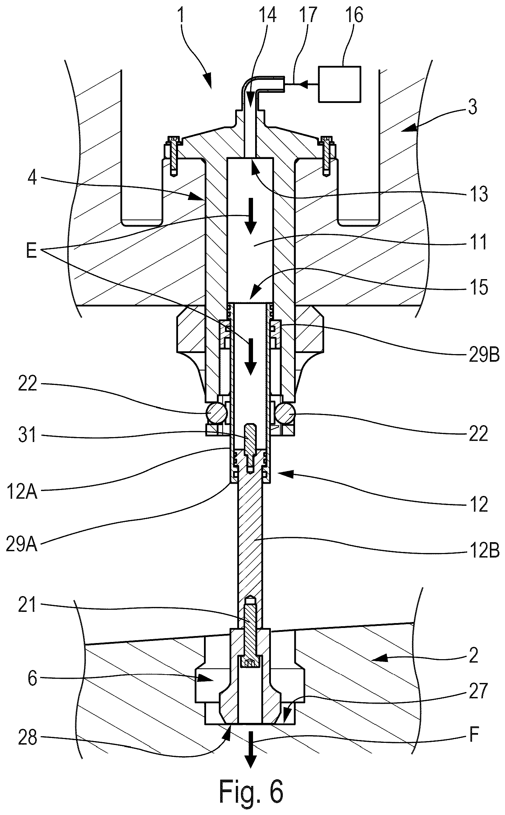

Par exemple, dans le mode de réalisation particulier représenté sur la figure 6, le plongeur 12 correspond à un piston télescopique comportant deux étages. Dans ce mode de réalisation particulier, le plongeur 12 comprend un étage intermédiaire 12A creux agencé de manière coulissante dans l'espace interne 11 du corps accrocheur 4 et un étage inférieur 12B agencé de manière coulissante à l'intérieur de l'étage intermédiaire 12A.

Le plongeur 12 télescopique permet d'obtenir une grande amplitude de déplacement et un encombrement réduit. Dans d'autres modes de réalisation (non représentés), le plongeur 12 peut comporter plus ou moins de deux étages selon l'amplitude de déplacement nécessaire pour l'application considérée.

L'espace interne 11 s'étend selon la longueur du corps accrocheur 4, entre l'épaulement 8 et l'extrémité du tronçon cylindrique 5 dépassant vers l'extérieur de la structure de support 3. Cet espace interne 11 comprend une extrémité fermée 13 pourvue d'un orifice 14 du côté de l'épaulement 8 et une extrémité ouverte 15 qui est opposée à l'extrémité fermée 13 et qui débouche vers l'extérieur du corps accrocheur 4 (vers la partie destinée à recevoir l'équipement 2). Dans la configuration verrouillée, l'extrémité ouverte 15 débouche à l'intérieur de la cavité 6 de l'équipement 2.

Pour déplacer le plongeur 12, le système 1 comporte un dispositif de déplacement 16 représenté schématiquement par un carré de la figure 2 à la figure 6. Dans un mode de réalisation préféré, le dispositif de déplacement 16 correspond à un générateur de pression. Toutefois, dans d'autres modes de réalisation, il peut s'agir d'un dispositif de déplacement électrique ou électromagnétique. Par exemple, il peut s'agir d'un dispositif de déplacement usuel de type vérin électrique ou permettant de déplacer le plongeur 12 par champ électromagnétique.

Dans le reste de la description, il sera fait référence au générateur de pression 16, étant entendu qu'il pourrait s'agir d'un autre dispositif de déplacement comme décrit ci-dessus.

Le générateur de pression 16 est relié à l'espace interne 11 via une liaison 17 usuelle connectée à l'orifice 14. Ce générateur de pression 16 est configuré pour générer une pression dans l'espace interne 11 de manière à pousser le plongeur 12 vers l'extrémité ouverte 15, en particulier vers l'extérieur du corps accrocheur 4.

De préférence, le générateur de pression 16 correspond à un système autonome qui peut être préalablement programmé ou commandé à distance. De manière non limitative, il peut s'agir d'une cartouche pyrotechnique génératrice de gaz, d'une cartouche génératrice de fluide, d'un système pneumatique ou encore d'un système hydraulique.

Le plongeur 12 comprend une première extrémité 18 agencée vers l'extrémité fermée 13 de l'espace interne 11 et une seconde extrémité 19 agencée vers l'extrémité ouverte 15. L'extrémité 18 du plongeur 12 est configurée pour être soumise à la pression générée par le générateur de pression 16. L'extrémité 19 du plongeur 12, quant à elle, comporte une tête 20 configurée pour pouvoir verrouiller l'équipement 2.

Dans le mode de réalisation particulier représenté de la figure 2 à la figure 6, la tête 20 correspond à une pièce rapportée fixée de façon coaxiale sur l'extrémité 19 du plongeur 12 à l'aide d'une vis 21. Toutefois, dans d'autres modes de réalisation (non représentés), la tête 20 peut correspondre à une forme particulière du plongeur 12 réalisée directement dans le corps de ce dernier.

En outre, le système 1 comporte des éléments de verrouillage 22 logés dans des ouvertures 23 du corps accrocheur 4. Les ouvertures 23 sont situées à l'extrémité du tronçon cylindrique 5 dépassant à l'extérieur de la structure de support 3. Les éléments de verrouillage 22 sont mobiles dans les ouvertures 23. En particulier, ils sont configurés pour pouvoir, soit faire saillie en partie à l'extérieur du corps accrocheur 4, soit être complètement logés à l'intérieur de celui-ci. De plus, ils sont sertis de manière à être prisonniers du corps accrocheur 4 et donc imperdables lors de l'éjection de l'équipement 2.

Dans le mode de réalisation particulier représenté de la figure 2 à la figure 6, les éléments de verrouillage 22 correspondent à des tonneaux. Toutefois, dans d'autres modes de réalisation (non représentés), il peut s'agir d'autres éléments de verrouillage tels que des billes, des rouleaux, des coins ou encore des clavettes.

Dans la configuration verrouillée (figure 2), le corps accrocheur 4 est positionné en partie dans la cavité 6 de l'équipement 2 et le plongeur 12 est retracté à l'intérieur de l'espace interne 11. Dans cette position, la tête 20 présente une forme configurée pour agir sur les éléments de verrouillage 22, à savoir pour les maintenir en partie sortis par les ouvertures 23. Les éléments de verrouillage 22, ainsi maintenus, font saillie vers l'extérieur du corps accrocheur 4 dans une gorge 24 de la cavité 6. En conséquence, les éléments de verrouillage 22 bloquent l'équipement 2 en translation selon la direction longitudinale du corps accrocheur 4. L'équipement 2 ainsi bloqué est donc lié, de façon verrouillée, à la structure de support 3, par le système 1.

Dans le mode de réalisation particulier représenté de la figure 2 à la figure 5, le système 1 assure notamment la liaison et le verrouillage entre l'équipement 2 et la structure de support 3. Toutefois, dans d'autres modes de réalisation, d'autres systèmes peuvent être utilisés en complément du système 1 en fonction de l'application considérée (par exemple un système pour précontraindre l'équipement 2 contre la structure de support 3, une fois que ledit équipement 2 est verrouillé).

Dans la configuration déverrouillée (figure 3), le générateur de pression 16 génère une pression dans l'espace interne 11, comme représenté schématiquement par des flèches E de la figure 3 à la figure 6. La pression générée par le générateur de pression 16 est configurée pour déplacer le plongeur 12 de manière à libérer les éléments de verrouillage 22. En effet, en raison du déplacement du plongeur 12, une partie plus étroite de la tête 20 se retrouve en regard des éléments de verrouillage 22, si bien que ces derniers peuvent se loger dans le corps accrocheur 4. La gorge 24 de la cavité 6 peut notamment comporter une forme adaptée, comme un chanfrein 25, pour contribuer à pousser les éléments de verrouillage 22 à l'intérieur du corps accrocheur 4 lors de l'éjection de l'équipement 2.

Lorsque les éléments de verrouillage 22 sont logés dans le corps accrocheur 4, ils ne font plus saillie et, par conséquent, l'équipement 2 n'est plus bloqué en translation. L'équipement 2 est donc déverrouillé et peut être séparé de la structure de support 3. Bien que le système 1 soit configuré pour réaliser activement l'éjection de l'équipement 2 par rapport à la structure de support 3, ladite éjection peut tout de même être initiée par ailleurs dès le déverrouillage de l'équipement 2, par exemple de façon passive par l'action de la gravité.

Par ailleurs, comme représenté sur la figure 3, le système 1 est configuré de sorte que, dans la configuration déverrouillée, le plongeur 12 n'est pas en contact avec l'équipement 2. En effet, dans cette configuration déverrouillée, il existe un jeu 26 entre une surface de contact 28 de la tête 20 du plongeur 12 et un fond 27 de la cavité 6. La surface de contact 28 correspond à la partie du plongeur 12 qui est destinée à venir au contact du fond 27 pour réaliser l'éjection de l'équipement 2.

Dans la configuration d'éjection (figure 4, figure 5 et figure 6), le plongeur 12 continue à être déplacé par la pression générée par le générateur de pression 16 de manière à venir au contact de l'équipement 2. En particulier, la surface de contact 28 de la tête 20 est plaquée contre le fond 27 de la cavité 6. Sous l'action de la pression générée par le générateur de pression 16, le plongeur 12 est configuré pour exercer un effort sur l'équipement 2, représenté schématiquement par une flèche F sur la figure 5. L'équipement 2 n'étant plus verrouillé, l'effort exercé par le plongeur 12 permet de l'écarter de la structure de support 3 de manière à réaliser leur séparation et donc l'éjection de l'équipement 2.

Comme représenté de la figure 2 à la figure 5, le système 1 comporte une butée 29 délimitant la fin de course du plongeur 12. Dans le cas d'un plongeur 12 correspondant à un piston télescopique, le système 1 comporte une butée pour chaque étage du piston. Par exemple, sur la figure 6, le système 1 comporte une butée 29A agencée à une extrémité de l'étage intermédiaire 12A (délimitant la fin de course de l'étage inférieur 12B) et une butée 29B agencée dans l'espace interne 11 du corps accrocheur 4 (délimitant la fin de course de l'étage intermédiaire 12A).

La conception du système 1 permet de garantir le séquencement des fonctions de déverrouillage et d'éjection. En effet, le système 1 est configuré de sorte que l'éjection de l'équipement 2 soit forcément successive à son déverrouillage. De plus, le jeu 26 permet d'obtenir un délai, correspondant à une marge de sécurité, pour éviter que le déverrouillage et l'éjection de l'équipement 2 se déroulement simultanément. On peut notamment obtenir une marge de sécurité plus ou moins longue en choisissant de façon appropriée la longueur du plongeur 12 et/ou la profondeur de la cavité 6 lors du dimensionnement du jeu 26.

Ainsi, grâce au système 1, on dispose d'une solution simple, légère, fiable et peu encombrante permettant de réaliser de manière séquencée et sécurisée le déverrouillage et l'éjection de l'équipement 2 par rapport à la structure de support 3. En effet, le système 1 utilise un seul mécanisme (impliquant un seul mouvement) et une seule source d'énergie (à savoir le générateur de pression 16) pour réaliser à la fois le déverrouillage et l'éjection de l'équipement 2. De plus, il permet d'éviter tout évènement indésirable (voire catastrophique) qui pourrait résulter d'un déverrouillage de l'équipement 2 sans éjection, ou inversement.

En outre, dans les modes de réalisation de la figure 2 à la figure 6, le déplacement du plongeur 12 est linéaire, ce qui permet d'obtenir un axe de déverrouillage et un axe d'éjection qui sont coaxiaux. Ceci limite significativement le risque de blocage lorsque l'on souhaite éjecter l'équipement 2 et rend le système 1 particulièrement fiable.

Par ailleurs, dans le mode de réalisation particulier représenté de la figure 2 à la figure 5, le système 1 comporte un limiteur d'effort 31 agencé sur l'extrémité 18 du plongeur 12. Le limiteur d'effort 31 présente une section réduite par rapport à celle du plongeur 12. Le limiteur d'effort 31 est notamment adapté pour être logé dans l'orifice 14 de l'espace interne 11 de manière à fermer ledit orifice 14 lorsque le plongeur 12 est rétracté dans la configuration verrouillée. Le limiteur d'effort 31 ainsi logé dans l'orifice 14 permet de limiter la surface sur laquelle la pression générée par le générateur de pression 16 s'applique. De cette manière, tant qu'une partie du limiteur d'effort 31 est logée dans l'orifice 14, l'effort exercé sur le plongeur 12 est limité, ce qui permet de contrôler la vitesse de déplacement dudit plongeur 12. Selon la longueur de la partie du limiteur d'effort 31 destinée à être logée dans l'orifice 14 on peut obtenir une limitation de l'effort sur une course plus ou moins longue.

Ainsi, le limiteur d'effort 31 permet d'éviter un déplacement trop rapide du plongeur 12, ce qui peut contribuer au bon séquencement du déverrouillage et de l'éjection de l'équipement 2. Cela peut également éviter un choc trop important entre le plongeur 12 et l'équipement 2 lors du contact pour réaliser l'éjection.

Dans le mode de réalisation représenté de la figure 2 à la figure 5, le système 1 présente une forme allongée et il est configuré de sorte que le plongeur 12 puisse être déplacé linéairement selon la direction longitudinale du système 1. Toutefois, dans d'autres modes de réalisation, le système 1 peut présenter d'autres configurations permettant d'autres types de déplacement pour le plongeur 12.

Par ailleurs, la structure de support 3 peut être équipée d'une pluralité de systèmes 1. Les systèmes 1 peuvent alors être répartis uniformément par rapport à la surface de l'équipement 2 de manière à obtenir une éjection sensiblement parallèle avec la structure de support 3. A l'inverse, les systèmes 1 peuvent être configurés pour obtenir un angle d'éjection entre l'équipement 2 et la structure de support 3. Par exemple, la course du plongeur 12 peut être différente d'un système 1 à un autre de manière à ne pas pousser l'équipement 2 partout de la même façon. Ou encore, certains systèmes 1 peuvent être agencés de manière inclinée sur la structure de support 3 pour pousser l'équipement 2 avec un angle particulier.

Dans un mode de réalisation particulier, on considère que l'équipement 2 présente une forme sensible allongée (par exemple un missile) et que la structure de support 3 est équipé de deux systèmes 1 agencés selon l'axe longitudinal de l'équipement 2 de part et d'autre du centre de gravité de l'équipement 2. Cette configuration permet de maîtriser l'éjection de l'équipement 2 avec un nombre réduit de systèmes d'accrochage et d'éjection.

En outre, selon l'application considérée, le système 1 peut être configuré pour éjecter l'équipement 2 en lui donnant une vitesse initiale plus ou moins importante. Par exemple, le générateur de pression 16 peut être configuré pour générer une pression plus ou moins importante permettant de déplacer le plongeur 12 plus ou moins rapidement et donc d'écarter l'équipement 2 avec plus ou moins de vitesse.

Dans le cadre de la présente invention, le système 1 tel que décrit ci-dessus est configuré pour mettre en œuvre un procédé P pour réaliser l'accrochage et l'éjection de l'équipement 2. Dans un mode de réalisation particulier, représenté schématiquement sur la figure 6, le procédé P comprend la suite d'étapes successives suivante : une étape E0 d'accrochage, une étape E1 de déverrouillage et une étape E2 d'éjection.

Préalablement aux étapes E1 et E2, l'étape E0 est mise en œuvre pour accrocher l'équipement 2 sur la structure de support 3. Cet accrochage consiste, tout d'abord, à mettre en place l'équipement 2 sur la structure de support 3, en particulier à insérer le corps accrocheur 4 dans la cavité 6 de l'équipement 2. En effet, comme expliqué ci-dessus, le système 1 est fixé sur la structure de support 3 de manière à laisser dépasser une extrémité du corps accrocheur 4 destinée à être insérée dans la cavité 6.

Une fois que le corps accrocheur 4 est insérée dans la cavité 6 et que l'équipement 2 est positionné tel que souhaité sur la structure de support 3, on réalise le verrouillage de l'équipement 2. Pour ce faire, le plongeur 12 est rétracté à l'intérieur du corps accrocheur 4 de manière à faire sortir les éléments de verrouillage 22 dans la gorge 24 de la cavité 6. Une telle rétractation du plongeur 12 à l'intérieur du corps accrocheur 4 peut être réalisée par un mécanisme non représenté sur les figures. Le système 1 est alors dans la configuration verrouillée de la figure 2.

Après le verrouillage de l'équipement 2, une étape de précontrainte peut être mise en œuvre par un système de précontrainte (non représenté) afin de plaquer l'équipement 2 contre la structure de support 3.

Lorsque l'on souhaite éjecter l'équipement 2 de la structure de support 3, les étapes E1 et E2 sont mises en œuvre.

L'étape E1 permet de réaliser, tout d'abord, le déverrouillage de l'équipement 2. Cette étape E1 consiste à commander le générateur de pression 16 pour générer une pression dans l'espace interne 11. Le plongeur 12, soumis à cette pression, est déplacé de manière à libérer les éléments de verrouillage 22 qui peuvent entrer à l'intérieur du corps accrocheur 4. Le système 1 est alors dans la configuration déverrouillée de la figure 3.

Une fois que l'équipement 2 est déverrouillé, l'étape E2 permet de réaliser l'éjection dudit équipement 2. Cette étape E2 consiste à continuer à générer une pression dans l'espace interne 11 de manière à continuer à déplacer le plongeur 12 vers l'équipement 2. Dans un premier temps, le plongeur 12 parcourt une distance correspondant au jeu 26, puis, dans un second temps, la tête 20 vient en contact contre le fond 28 de la cavité 6. Le système 1 est alors dans la configuration d'éjection représentée sur la figure 4.

Une fois le plongeur 12 en contact avec l'équipement 2, la pression générée par le générateur de pression 16 permet au plongeur 12 d'exercer un effort sur l'équipement 2 pour l'écarter de la structure de support 3. Le plongeur 12 pousse l'équipement 2 en l'éloignant de la structure de support 3 jusqu'à ce que ledit plongeur 12 soit complètement déployé. L'impulsion ainsi donnée à l'équipement 2 permet de l'éjecter. Le système 1 est alors dans la configuration d'éjection de la figure 5.

Dans le mode de réalisation particulier représenté sur la figure 6, le plongeur 12 télescopique est déplacé comme suit. L'étage inférieur 12B est déplacé en premier jusqu'à ce qu'il arrive en butée contre la butée 29. Puis, l'étage intermédiaire 12A est déplacé jusqu'à arriver en butée contre la butée 30. Le système 1 est alors dans la configuration d'éjection de la figure 6.

Le système 1, tel que décrit ci-dessus, peut être utilisé dans des applications variées. Il peut notamment être adapté pour un grand nombre d'applications nécessitant de larguer un objet.

Par exemple, le système 1 peut être adapté pour accrocher un missile (équipement 2) sur une installation de tir (structure de support 3) d'un aéronef. Ainsi, comme représenté sur la figure 1, le missile peut être accroché et verrouillé à l'aide du système 1 en étant plaqué contre des appuis calants 34 d'une structure de maintien 33. Lorsque l'on souhaite larguer (ou éjecter) le missile, les étapes E1 et E2 de déverrouillage et d'éjection décrites ci-dessus sont mises en œuvre.

Dans le cadre de l'application particulière à un missile, la présente invention permet de bénéficier d'une interface entre le système 1 et le missile (à savoir la cavité 6) qui est unique et qui n'est pas située sur une peau externe du missile. Ceci est particulièrement intéressant dans la mesure où la peau externe des missiles peut être relativement sensible et où il peut être important d'avoir une peau externe aussi continue et/ou lisse que possible (par exemple pour des missiles hypervéloces).

Le système 1, tel que décrit ci-dessus, présente ainsi de nombreux avantages. En particulier :
- il comprend un seul mécanisme avec une seule source d'énergie, ce qui réduit significativement la complexité, l'encombrement et la masse du système 1 ;
- il présente une cinématique simple qui réalise à la fois le déverrouillage et l'éjection de l'équipement 2 ;
- il permet de réaliser facilement un séquencement des étapes de déverrouillage et d'éjection de manière fiable et sécurisée ;
- il permet de limiter les risques liés à un coincement de l'équipement 2 lors de l'éjection de ce dernier ; et
- il est particulièrement adapté aux contraintes liées à l'utilisation aéroportée d'un engin ou une arme largable tel qu'un missile.

## Revendications

1. Système d'accrochage et d'éjection pour un équipement (2) destiné à être accroché de façon éjectable à une structure de support (3), en particulier une installation de tir d'un aéronef, ledit système (1) comportant au moins :
- un corps accrocheur (4) destiné à être agencé au moins en partie entre l'équipement (2) et la structure de support (3) pour réaliser l'accrochage ;
- un plongeur (12) agencé dans le corps accrocheur (4) de façon mobile ;
- un dispositif de déplacement (16) configuré pour déplacer le plongeur (12) par rapport au corps accrocheur (4) ; et
- une pluralité d'éléments de verrouillage (22) sur lesquels le plongeur (12) est configuré pour agir en étant déplacé par le dispositif de déplacement (16), le système (1) étant configuré pour prendre, successivement, au moins les configurations suivantes :
- une configuration verrouillée dans laquelle le plongeur (12) agit sur les éléments de verrouillage (22) pour les verrouiller de manière à lier solidairement l'équipement (2) à la structure de support (3) ;
- une configuration déverrouillée dans laquelle le plongeur (12), en étant déplacé par le dispositif de déplacement (16), déverrouille les éléments de verrouillage (22) de manière à libérer l'équipement (2) par rapport à la structure de support (3) ; et
- une configuration d'éjection dans laquelle le plongeur (12), en continuant d'être déplacé par le dispositif de déplacement (16), vient en contact avec l'équipement (2) et exerce un effort sur ledit équipement (2) de manière à réaliser une éjection dudit équipement (2) par rapport à la structure de support (3),
**caractérisé en ce que**, dans la configuration déverrouillée, il existe un jeu (26) entre la partie du plongeur (12) destinée à venir en contact avec l'équipement (2) dans la configuration d'éjection et ledit équipement (2), le jeu (26) étant configuré pour séquencer les configurations de déverrouillage et d'éjection.

2. Système selon la revendication 1,
**caractérisé en ce que** le plongeur (12) comprend une extrémité (19) pourvue d'une tête (20) configurée pour pouvoir agir sur les éléments de verrouillage (22) lorsque le plongeur (12) est déplacé.

3. Système selon l'une des revendications 1 et 2,
**caractérisé en ce que** le plongeur (12) correspond à un piston agencé de façon coulissante dans un espace interne (11) du corps accrocheur (4) de manière à former un vérin, une extrémité (19) du plongeur (12) étant configurée pour pouvoir agir sur les éléments de verrouillage (22).

4. Système selon la revendication 3,
**caractérisé en ce que** le vérin formé par le plongeur (12) et le corps accrocheur (4) correspond à un vérin simple effet.

5. Système selon la revendication 3,
**caractérisé en ce que** le vérin formé par le plongeur (12) et le corps accrocheur (4) correspond à un vérin double effet.

6. Système selon l'une des revendications 3 à 5,
**caractérisé en ce que** le piston formé par le plongeur (12) correspond à un piston télescopique comprenant au moins un étage intermédiaire (12A) creux agencé de façon coulissante dans l'espace interne (11) du corps accrocheur (4) et un étage inférieur (12B) agencé de façon coulissante dans l'étage intermédiaire (12A), l'une des extrémités de l'étage inférieur (12B) étant configurée pour pouvoir agir sur les éléments de verrouillage (22).

7. Système selon l'une quelconque des revendications 1 à 6,
**caractérisé en ce que** le dispositif de déplacement (16) correspond à un générateur de pression relié à l'espace interne (11) du corps accrocheur (4) par un orifice (14) et configuré pour pouvoir générer une pression sur le plongeur (12) de manière à déplacer ledit plongeur (12).

8. Système selon la revendication 7,
**caractérisé en ce que** le dispositif de déplacement (16) correspond à l'un des générateurs de pression suivants : une cartouche pyrotechnique génératrice de gaz, une cartouche génératrice de fluide, un dispositif pneumatique, un dispositif hydraulique.

9. Système selon l'une des revendications 7 et 8,
**caractérisé en ce qu'**il comporte un limiteur d'effort (31) agencé sur le plongeur (12) et présentant une section réduite par rapport à celle dudit plongeur (12), le limiteur d'effort (31) étant configuré pour fermer l'orifice (14) reliant le dispositif de déplacement (16) à l'espace interne (11) du corps accrocheur (4) en étant logé dans ledit orifice (4) au moins lorsque le système est dans la configuration verrouillée.

10. Système selon l'une quelconque des revendications 1 à 6,
**caractérisé en ce que** le dispositif de déplacement (16) correspond à l'un des dispositifs suivants : un dispositif électrique, un dispositif électromagnétique.

11. Système selon l'une quelconque des revendications 1 à 10,
**caractérisé en ce que** les éléments de verrouillage (22) correspondent à l'un des éléments suivants : des tonneaux, des billes, des rouleaux, des coins, des clavettes.

12. Structure de support, en particulier une installation de tir d'un aéronef, sur laquelle un équipement (2), en particulier un missile, est destiné à être accroché de façon éjectable,
**caractérisée en ce qu'**elle comporte au moins un système (1) d'accrochage et d'éjection selon l'une quelconque des revendications 1 à 11.

13. Structure de support selon la revendication 12,
**caractérisée en ce qu'**elle comporte au moins deux systèmes (1) d'accrochage et d'éjection agencés de part et d'autre du centre de gravité de l'équipement (2).

14. Procédé pour éjecter un équipement (2) accroché de façon éjectable à une structure de support (3) à l'aide d'au moins un système (1) selon l'une quelconque des revendications 1 à 11, ledit procédé (P) comportant, à partir d'une configuration verrouillée dans laquelle l'équipement (2) est accroché et verrouillé à la structure de support (3), au moins la suite d'étapes successives suivante :
- une étape (E1) de déverrouillage pour commander le dispositif de déplacement (16) de manière à déplacer le plongeur (12) de sorte qu'il libère les éléments de verrouillage (22) et déverrouille l'équipement (2) par rapport à la structure de support (3) ; et
- une étape (E2) d'éjection pour continuer de déplacer le plongeur (12) à l'aide du dispositif de déplacement (16) de sorte que ledit plongeur (12) vienne en contact avec l'équipement (2) et exerce un effort sur ledit équipement (2) pour réaliser l'éjection dudit équipement (2) par rapport à la structure de support (3), **caractérisé en ce qu'**à la fin de l'étape (E1) de déverrouillage, il existe un jeu (26) entre la partie du plongeur (12) destinée à venir en contact avec l'équipement (2) à l'étape (E2) d'éjection et ledit équipement (2), le jeu (26) étant configuré pour séquencer l'étape (E1) de déverrouillage et l'étape (E2) d'éjection.

15. Procédé selon la revendication 14,
**caractérisé en ce qu'**il comprend une étape (E0) d'accrochage, mise en œuvre préalablement à l'étape (E1) de déverrouillage, pour positionner l'équipement (2) sur la structure de support (3) de sorte que le système (1) soit, au moins en partie, agencé entre ledit équipement (2) et ladite structure de support (3), et pour déplacer le plongeur (12) de sorte qu'il agisse sur les éléments de verrouillage (22) pour les verrouiller de manière à lier solidairement l'équipement (2) à la structure de support (3).

## Patentansprüche

1. Befestigungs- und Auswurfsystem für eine Einrichtung (2), die dazu bestimmt ist, auswerfbar an einer Trägerstruktur (3), insbesondere einer Abschussvorrichtung eines Luftfahrzeugs, befestigt zu werden, wobei das System (1) mindestens umfasst:
- einen Befestigungskörper (4), der dazu bestimmt ist, mindestens teilweise zwischen der Ausrüstung (2) und der Trägerstruktur (3) angeordnet zu werden, um das Befestigen auszuführen;
- einen im Befestigungskörper (4) beweglich angeordneten Tauchkolben (12);
- eine Bewegungsvorrichtung (16), die konfiguriert ist, um den Tauchkolben (12) in Bezug auf den Befestigungskörper (4) zu bewegen; und
- eine Vielzahl von Verriegelungselementen (22), auf denen der Tauchkolben (12) zum Einwirken konfiguriert ist, indem er durch die Bewegungsvorrichtung (16) bewegt wird, wobei das System (1) konfiguriert ist, um nacheinander mindestens die folgenden Konfigurationen einzunehmen:
- eine verriegelte Konfiguration, wobei der Tauchkolben (12) auf die Verriegelungselemente (22) einwirkt, um diese zu verriegeln, so dass die Ausrüstung (2) fest mit der Trägerstruktur (3) verbunden ist;
- eine entriegelte Konfiguration, wobei der Tauchkolben (12), indem er durch die Bewegungsvorrichtung (16) bewegt wird, die Verriegelungselemente (22) entriegelt, so dass die Ausrüstung (2) in Bezug auf die Trägerstruktur (3) freigegeben wird; und
- eine Auswurfkonfiguration, wobei der Tauchkolben (12), der weiterhin durch die Bewegungsvorrichtung (16) bewegt wird, mit der Ausrüstung (2) in Kontakt kommt und eine Kraft auf die Ausrüstung (2) ausübt, um einen Auswurf der Ausrüstung (2) in Bezug auf die Trägerstruktur (3) auszuführen,
**dadurch gekennzeichnet, dass** in der entriegelten Konfiguration ein Spiel (26) zwischen dem Teil des Tauchkolbens (12), der dazu bestimmt ist, in der Auswurfkonfiguration mit der Ausrüstung (2) in Kontakt zu kommen, und der Ausrüstung (2) vorliegt, wobei das Spiel (26) konfiguriert ist, um die Entriegelungs- und Auswurfkonfigurationen zu sequenzieren.

2. System nach Anspruch 1,
**dadurch gekennzeichnet, dass** der Tauchkolben (12) ein Ende (19) umfasst, das mit einem Kopf (20) versehen ist, der konfiguriert ist, um auf die Verriegelungselemente (22) einzuwirken, wenn der Tauchkolben (12) bewegt wird.

3. System nach einem der Ansprüche 1 und 2,
**dadurch gekennzeichnet, dass** der Tauchkolben (12) einem in einem Innenraum (11) des Befestigungskörpers (4) gleitend angeordneten Kolben entspricht, so dass ein Zylinder gebildet ist, wobei ein Ende (19) des Tauchkolbens (12) konfiguriert ist, um auf die Verriegelungselemente (22) einwirken zu können.

4. System nach Anspruch 3,
**dadurch gekennzeichnet, dass** der durch den Tauchkolben (12) und den Befestigungskörper (4) gebildete Zylinder einem einfachwirkenden Zylinder entspricht.

5. System nach Anspruch 3,
**dadurch gekennzeichnet, dass** der durch den Tauchkolben (12) und den Befestigungskörper (4) gebildete Zylinder einem doppeltwirkenden Zylinder entspricht.

6. System nach einem der Ansprüche 3 bis 5,
**dadurch gekennzeichnet, dass** der durch den Tauchkolben (12) gebildete Kolben einem Teleskopkolben entspricht, der mindestens eine hohle Zwischenstufe (12A) umfasst, die gleitend im Innenraum (11) des Befestigungskörpers angeordnet ist (4), und eine untere Stufe (12B), die gleitend in der Zwischenstufe (12A) angeordnet ist, wobei eines der Enden der unteren Stufe (12B) konfiguriert ist, um auf die Verriegelungselemente (22) einwirken zu können.

7. System nach einem der Ansprüche 1 bis 6,
**dadurch gekennzeichnet, dass** die Bewegungsvorrichtung (16) einem Druckgenerator entspricht, der über eine Öffnung (14) mit dem Innenraum (11) des Befestigungskörpers (4) verbunden und konfiguriert ist, um einen Druck auf den Tauchkolben (12) zu erzeugen, so dass der Tauchkolben (12) bewegt wird.

8. System nach Anspruch 7,
**dadurch gekennzeichnet, dass** die Bewegungsvorrichtung (16) einem der folgenden Druckgeneratoren entspricht: einer pyrotechnischen Gaserzeugungskartusche, einer Fluiderzeugungskartusche, einer pneumatischen Vorrichtung, einer hydraulischen Vorrichtung.

9. System nach einem der Ansprüche 7 und 8,
**dadurch gekennzeichnet, dass** sie einen Kraftbegrenzer (31) umfasst, der auf dem Tauchkolben (12) angeordnet ist und einen Querschnitt aufweist, der in Bezug auf den des Tauchkolbens (12) reduziert ist, wobei der Kraftbegrenzer (31) konfiguriert ist, um die Öffnung (14), die die Bewegungsvorrichtung (16) mit dem Innenraum (11) des Befestigungskörpers (4) verbindet, zu verschließen, indem er in der Öffnung (4) mindestens dann aufgenommen ist, wenn sich das System in der verriegelten Konfiguration befindet.

10. System nach einem der Ansprüche 1 bis 6,
**dadurch gekennzeichnet, dass** die Bewegungsvorrichtung (16) einer der folgenden Vorrichtungen entspricht: einer elektrischen Vorrichtung, einer elektromagnetischen Vorrichtung.

11. System nach einem der Ansprüche 1 bis 10,
**dadurch gekennzeichnet, dass** die Verriegelungselemente (22) einem der folgenden Elemente entsprechen: Walzen, Kugeln, Rollen, Keilen, Passfedern.

12. Trägerstruktur, insbesondere Abschussvorrichtung eines Luftfahrzeuges, auf der eine Ausrüstung (2), insbesondere ein Flugkörper, auswerfbar befestigt werden soll,
**dadurch gekennzeichnet, dass** sie mindestens ein System (1) zum Befestigen und Auswerfen nach einem der Ansprüche 1 bis 11 umfasst.

13. Trägerstruktur nach Anspruch 12,
**dadurch gekennzeichnet, dass** sie mindestens zwei Systeme (1) zum Befestigen und Auswerfen umfasst, die beiderseits des Schwerpunkts der Ausrüstung (2) angeordnet sind.

14. Verfahren zum Auswerfen einer Ausrüstung (2), die auswerfbar an einer Trägerstruktur (3) befestigt ist, mit Hilfe mindestens eines Systems (1) nach einem der Ansprüche 1 bis 11, wobei das Verfahren (P) ausgehend von einer verriegelten Konfiguration, in der die Ausrüstung (2) an der Trägerstruktur (3) befestigt und verriegelt ist, mindestens die folgende Abfolge aufeinanderfolgender Schritte umfasst:
- einen Schritt (E1) des Entriegelns, um die Bewegungsvorrichtung (16) so zu steuern, dass der Tauchkolben (12) bewegt wird, so dass die Verriegelungselemente (22) freigegeben werden und die Ausrüstung (2) in Bezug auf die Trägerstruktur (3) entriegelt wird; und
- einen Schritt (E2) des Auswerfens, um den Tauchkolben (12) mit Hilfe der Bewegungsvorrichtung (16) weiterhin so zu bewegen, dass der Tauchkolben (12) mit der Ausrüstung (2) in Kontakt kommt und eine Kraft auf die Ausrüstung (2) ausübt, um das Auswerfen der Ausrüstung (2) in Bezug auf die Trägerstruktur (3) auszuführen,
**dadurch gekennzeichnet, dass** am Ende des Schritts (E1) des Entriegelns ein Spiel (26) zwischen dem Teil des Tauchkolbens (12), der in Schritt (E2) des Auswerfens mit der Ausrüstung (2) in Kontakt kommen soll, und der Ausrüstung (2) vorliegt, wobei das Spiel (26) konfiguriert ist, um den Schritt (E1) des Entriegelns und den Schritt (E2) des Auswerfens zu sequenzieren.

15. Verfahren nach Anspruch 14,
**dadurch gekennzeichnet, dass** es einen Schritt (E0) des Befestigens umfasst, der vor dem Schritt (E1) des Entriegelns implementiert wird, um die Ausrüstung (2) auf der Trägerstruktur (3) so zu positionieren, dass das System (1) zumindest teilweise zwischen der Ausrüstung (2) und der Trägerstruktur (3) angeordnet ist, und um den Tauchkolben (12) so zu bewegen, dass er auf die Verriegelungselemente (22) einwirkt, um diese zu verriegeln, so dass die Ausrüstung (2) fest mit der Trägerstruktur (3) verbunden ist.

## Claims

1. A system for attaching and ejecting an equipment (2) intended to be attached in an ejectable manner to a support structure (3), in particular a firing installation of an aircraft, said system (1) comprising at least:
- an attachment body (4) intended to be arranged at least partly between the equipment (2) and the support structure (3) to perform the attachment;
- a plunger (12) arranged in the attachment body (4) in a movable manner;
- a displacement device (16) configured to displace the plunger (12) relative to the attachment body (4); and
- a plurality of locking elements (22) on which the plunger (12) is configured to act when moved by the displacement device (16), the system (1) being configured to take, successively, at least the following configurations:
- a locked configuration in which the plunger (12) acts on the locking elements (22) to lock them so as to securely connect the equipment (2) to the support structure (3);
- an unlocked configuration in which the plunger (12), when moved by the displacement device (16), unlocks the locking elements (22) so as to release the equipment (2) from the support structure (3); and
- an ejection configuration in which the plunger (12), continuing to be moved by the displacement device (16), comes into contact with the equipment (2) and exerts a force on said equipment (2) so as to eject said equipment (2) from the support structure (3),
**characterized in that**, in the unlocked configuration, there is a clearance (26) between the part of the plunger (12) intended to come into contact with the equipment (2) in the ejection configuration and said equipment (2), the clearance (26) being configured to sequence the unlocking and ejection configurations.

2. The system according to claim 1,
**characterized in that** the plunger (12) comprises an end (19) provided with a head (20) configured to act on the locking elements (22) when the plunger (12) is moved.

3. The system according to one of claims 1 and 2,
**characterized in that** the plunger (12) corresponds to a piston arranged in a sliding manner in an internal space (11) of the attachment body (4) so as to form a cylinder, one end (19) of the plunger (12) being configured to act on the locking elements (22).

4. The system according to claim 3,
**characterized in that** the cylinder formed by the plunger (12) and the attachment body (4) corresponds to a single-acting cylinder.

5. The system according to claim 3,
**characterized in that** the cylinder formed by the plunger (12) and the attachment body (4) corresponds to a double-acting cylinder.

6. The system according to one of claims 3 to 5,
**characterized in that** the piston formed by the plunger (12) corresponds to a telescopic piston comprising at least one hollow intermediate stage (12A) arranged so as to slide in the internal space (11) of the attachment body (4) and a lower stage (128) arranged so as to slide in the intermediate stage (12A), one end of the lower stage (12B) being configured so as to be able to act on the locking elements (22).

7. The system according to any of claims 1 to 6,
**characterized in that** the displacement device (16) corresponds to a pressure generator connected to the internal space (11) of the attachment body (4) by an orifice (14) and configured to be able to generate pressure on the plunger (12) so as to displace said plunger (12).

8. The system according to claim 7,
**characterized in that** the displacement device (16) corresponds to one of the following pressure generators: a pyrotechnic gas-generating cartridge, a fluid-generating cartridge, a pneumatic device, a hydraulic device.

9. The system according to one of claims 7 and 8,
**characterized in that** it comprises a force limiter (31) arranged on the plunger (12) and having a cross-section reduced in relation to that of said plunger (12), the force limiter (31) being configured to close the orifice (14) connecting the displacement device (16) to the internal space (11) of the attachment body (4) by being housed in said orifice (4) at least when the system is in the locked configuration.

10. The system according to any one of claims 1 to 6,
**characterized in that** the displacement device (16) corresponds to one of the following devices: an electrical device, an electromagnetic device.

11. The system according to any of claims 1 to 10, **characterized in that** the locking elements (22) correspond to one of the following: barrels, balls, rollers, wedges, keys.

12. A support structure, in particular an aircraft launch device, on which equipment (2), in particular a missile, is intended to be attached in an ejectable manner,
**characterized in that** it comprises at least one attachment and ejection system according to any one of claims 1 to 11.

13. The support structure according to claim 12,
**characterized in that** it comprises at least two attachment and ejection systems (1) arranged on either side of the center of gravity of the equipment (2).

14. A method for ejecting equipment (2) ejectably attached to a support structure (3) using at least one system (1) according to any one of claims 1 to 11, said method (P) comprising, starting from a locked configuration in which the equipment (2) is attached and locked to the support structure (3), at least the following successive steps:
- an unlocking step (E1) to control the displacement device (16) so as to move the plunger (12) such that it releases the locking elements (22) and unlocks the equipment (2) relative to the support structure (3); and
- an ejection step (E2) to continue moving the plunger (12) using the displacement device (16) so that said plunger (12) comes into contact with the equipment (2) and exerts a force on said equipment (2) to achieve the ejection of said equipment (2) relative to the support structure (3),
**characterized in that** at the end of the unlocking step (E1), there is a clearance (26) between the part of the plunger (12) intended to come into contact with the equipment (2) in the ejection step (E2) and said equipment (2), the clearance (26) being configured to sequence the unlocking step (E1) and the ejection step (E2).

15. The method according to claim 14,
**characterized in that** it comprises a engagement step (E0), performed prior to the unlocking step (E1), to position the equipment (2) on the support structure (3) so that the system (1) is, at least in part, arranged between said equipment (2) and said support structure (3), and for moving the plunger (12) so that it acts on the locking elements (22) to lock them in order to securely connect the equipment (2) to the support structure (3).
